# EUROPEAN PATENT SPECIFICATION

(11) **EP 2 595 825 B1**
(45) Date of publication and mention of the grant of the patent: **21.01.2015**
(21) Application number: 11736067.7
(22) Date of filing: 20.07.2011
(51) Int. Cl.: B60J 7/06

(54) **STRUCTURE FOR A SLIDING ROOF, SLIDING ROOF SYSTEM, TRUCK WITH SLIDING ROOF SYSTEM, CURTAINSIDER TRAILER WITH A SLIDING ROOF SYSTEM**
STRUKTUR FÜR EIN SCHIEBEVERDECK, SCHIEBEVERDECKSYSTEM, LASTWAGEN MIT EINEM SCHIEBEVERDECKSYSTEM, PLANENAUFLIEGER MIT EINEM SCHIEBEVERDECKSYSTEM
STRUCTURE POUR UN TOIT COULISSANT, SYSTÈME DE TOIT COULISSANT, CAMION AVEC UN SYSTÈME DE TOIT COULISSANT, SEMI-REMORQUE À RIDEAUX LATÉRAUX AVEC UN SYSTÈME DE TOIT COULISSANT

(30) Priority: 23.07.2010 BE 201000461
(43) Date of publication of application: 29.05.2013
(73) Proprietor: European Trailer Systems GmbH, 47441 Moers (DE)
(72) Inventor: RAYEN, Luc, Theodorus, Julien, B-3580 Beringen (BE); LEURS, Joris, B-3580 Beringen (BE)
(74) Representative: Sparing, Rolf Klaus
(86) International application number: PCT/EP2011/062399
(87) International publication number: WO 2012/010618

(56) References cited:
- EP-A1- 2 106 947
- WO-A1-97/32745
- DE-U1-202006 005 850

## Description

The invention relates to a structure for a sliding roof with a tarpaulin comprising longitudinal members, cross-members and folding plates between the cross-members that are connected to the cross-members.

The invention also relates to a sliding roof system and a truck and curtainsider trailer equipped with a sliding roof system.

Such a structure is known for roof systems for trailers and trucks.

A sliding roof of a truck includes two longitudinal members (usually aluminium or steel). Above them are a number of cross-members on which bearings are mounted. These cross-members (roofsticks) are connected to each other by folding plates usually made of plastic. Above these roofsticks, a roof tarpaulin is fitted. During the opening and closing of the sliding roof, the folding plates are folded up during opening and stretched out during closing.

In Europe, a number of standards have been established for securing loads on trucks. One of these standards is EN12642 Code XL. This standard specifies how strong a structure must be for a specific loading capacity of the truck. It is especially the case that the structure must be able to withstand the forces that can be exerted by the load on the sides of the truck. If the truck is equipped with a sliding roof, this sliding roof, and in some cases also a fixed roof, must be reinforced. This is done by adding additional resources in the form of a diagonal cable reinforcement or a reinforced roof tarpaulin or reinforcements in the longitudinal members or a combination of these. Such a reinforcement does increase the weight of the sliding roof and the complexity of the structure.

It is an object of the invention to provide a structure for a sliding roof that reinforces the sliding roof.

The construction of a sliding roof according to the invention is characterised in that the folding plates and the longitudinal members have complementary profiles extending in a direction parallel to the longitudinal members to form a mechanical connection between lying-down folding plates and the longitudinal members.

The complementary profiles, such as a slot in the longitudinal member and a raised edge in the folding plates or bar on the folding plate, interlock with each other or lie alongside each other when the folding plates are lying down. In one embodiment of the invention, the complementary profiles are designed so that the folding plates are no longer able to move upwards when the longitudinal members bend.

Thus, with folding plates that are lying down, a mechanical connection is formed between the folding plates and the longitudinal members. Via the folding plates, a mechanical connection is thus also made between the longitudinal members and the cross-members. This mechanical connection can transmit forces between the longitudinal members and the cross-members. The whole structure is thus reinforced. The profiles prevent the longitudinal members from moving in or out. A profile can be formed by a slot, a groove, a bar or a raised edge. A bar can fall into a slot. Also, two raised edges, one from the folding plate and one in the longitudinal member can be adjacent to each other.

In a preferred embodiment, the folding plates consist of two outer sections, coupled to a cross-member, separated by a flexible middle section, whereby the two outer sections taper towards the middle section. The radiating shape of the folding plates to the cross-members conducts the forces to a relatively long part of the cross-members.

Preferably, such a folding plate contains reinforcement ribs that diverge in a fan shape. This effectively conducts the forces to the longitudinal member.

In a preferred embodiment, a folding plate consists of a plastic component made from one piece or a combination of plastic with added materials such as reinforcement materials. These added materials can be Kevlar or Twaron or glass fibre.

A metal plate with a plastic coating can also be used.

In one embodiment, a number of cross-members are shaped so that they have a complementary profile and can disengage from the longitudinal members when the sliding roof is opened.

Usually all of the cross-members on both sides are equipped with running tracks that allow the cross-members to move along the longitudinal members and prevent them from falling off the longitudinal members. In one embodiment, the cross-members are shaped so that a number of them can disengage from the longitudinal members.

These and other aspects of the invention are described here and illustrated by means of the drawing.

The drawing illustrates the following:
Figure 1 shows a roof structure for a sliding roof;
Figure 2 shows a detail of a known structure;
Figures 3 and 4 show a detail of a structure according to the invention;
Figures 5 and 6 show further embodiments of the invention;
Figure 7 shows a number of complementary profiles.

The figures are not drawn to scale; similar parts are generally indicated by the same reference numbers.

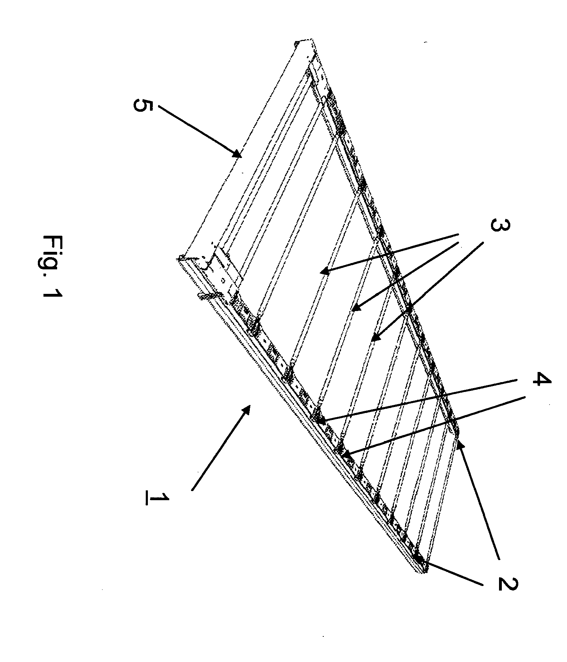

Figure 1 shows a sliding roof for a truck. A sliding roof of a truck comprises two longitudinal members 2 (usually aluminium or steel). Above them are a number of cross-members 3 on which bearings are mounted. These cross-members (roofsticks) are connected to each other by plastic folding plates 4. Above these roofsticks, a roof tarpaulin is fitted (not shown here). On the back of the truck is a folding bar 5 that can be folded upwards so that all of the roofsticks mounted on each other can move forwards and the roof is opened.

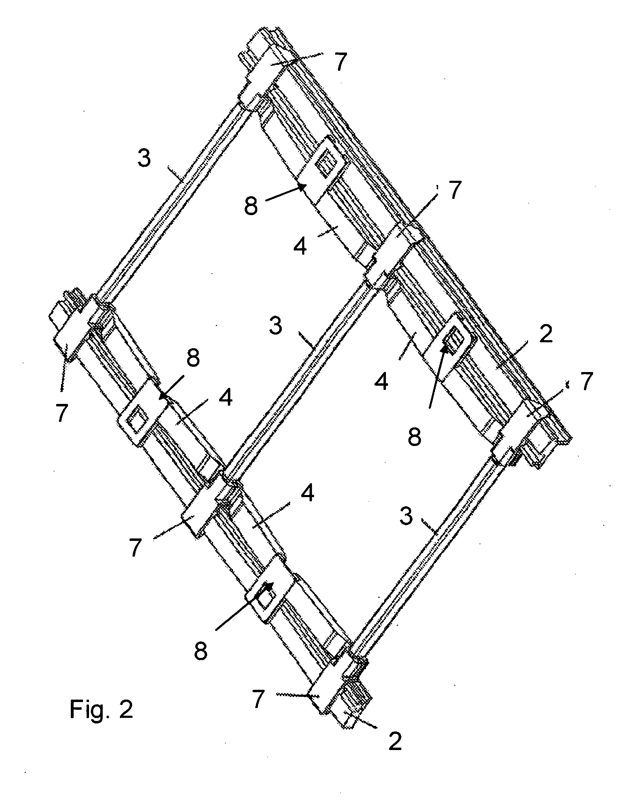

Figure 2 shows a known structure, known from German Gebrauchsmuster DE202006005850.

The folding plates 4 are connected on both sides to the cross-members 3. The cross-members are equipped on both ends with parts 7 equipped with bearings. These parts ensure that the cross-members can move over and along the longitudinal members. A middle section 8 of the folding plate can pivot or is elastic. By bringing together the cross-members, the middle section 8 moves upwards and the folding plates are folded double. In the expanded state, as shown in Figure 2, the distance between the cross-members is equal to the width of the folding plates. The folding plates can be adjacent to the longitudinal members 2. Similar structures with folding plates are also known from the international patent application WO 97/32745 and European patent application EP 2 106 947.

In the European regulations, more stringent requirements are set for the strength of the sliding roof. This especially relates to the forces that can be exerted by the load on the sides of the truck, for example by the load.

To meet these requirements, the sliding roof is additionally reinforced, for example by adding steel cables, or by strengthening the longitudinal members with steel parts.

Such a reinforcement does increase the weight of the sliding roof and the complexity of the structure.

It is an object of the invention to provide a structure for a sliding roof that reinforces the sliding roof.

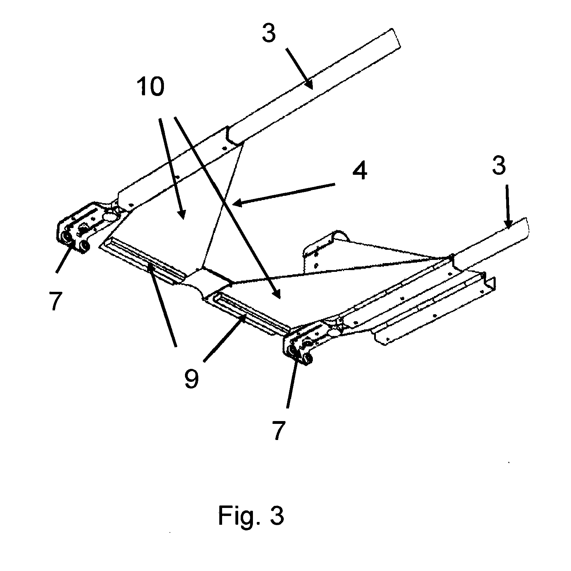

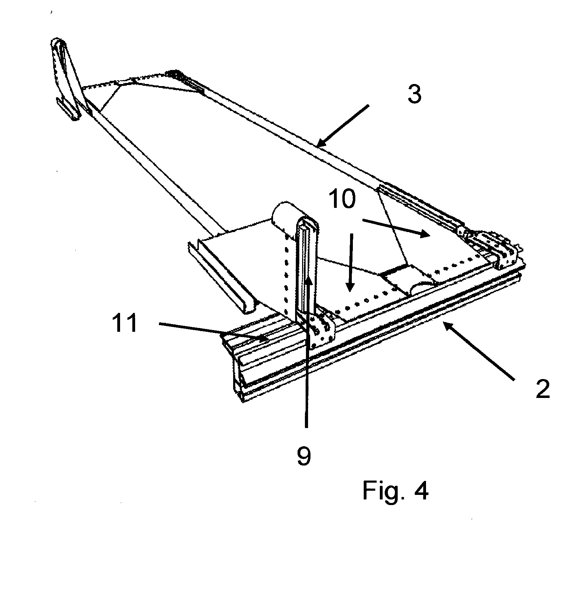

Figures 3 and 4 show details of a structure according to the invention.

The folding panels are equipped with bars 9 on the side facing the longitudinal member. The longitudinal members are equipped on the side facing the folding plates with a longitudinal slot 11 with a shape complementary to the shape of the bars 9. The longitudinal slot 11 can also serve as a guide slot for the bearings in part 7. In the pushed down state, the bars 9 lie in the slot 11. This strengthens the structure. In this embodiment, the folding plates 4 are equipped with parts 10 that run in width to the cross-members 3. This creates a large contact surface with the cross-member, and the forces can be effectively conducted to the cross-members. Between the two parts 10 is a flexible or hinged part.

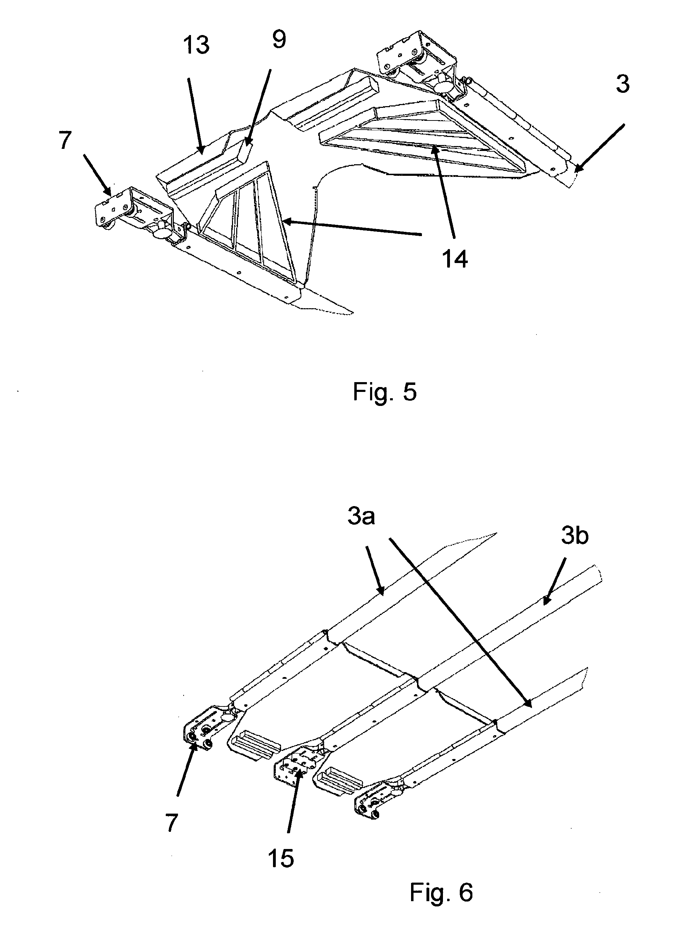

Figures 5 and 6 show a number of further embodiments of a sliding roof structure according to the invention.

Figure 5 shows the folding plates according to the invention produced from one 1 part, implemented with complementary parts in the form of bars 9 and stops 13. The stops 13, in the folded down state, lie against a vertical edge of a longitudinal member 2. The edge then grips, as it were, the edge of the longitudinal member. This figure also shows that the folding plates are equipped with reinforcement ribs 14 that radiate to the cross-members.

In Figure 6, the structure is made so that there are two types of cross-members, type 3a that remains connected to the longitudinal members 2 and type 3b that in the open state disengages from the longitudinal members 2. In this type, the end of the cross-members is equipped with a complementary profile to the profile of the longitudinal member. In Figure 6, the part 15 is equipped with two bars and a stop.

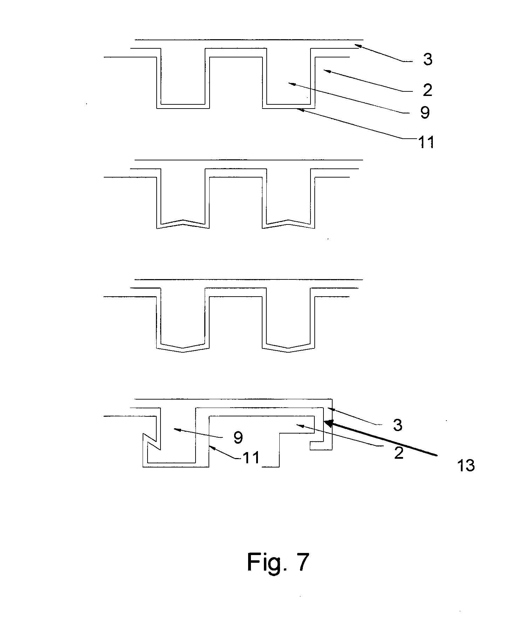

Figure 7 shows a number of possible complementary profiles and stops. In these examples, the folding plates are equipped with bars and the longitudinal members are equipped with a groove or slot. Of course, the folding plates can also be equipped with one or more slots and the longitudinal members can be equipped with bars. It is preferable, however, that the folding plates are equipped with bars because the longitudinal slot of the longitudinal member can then also serve as a guide slot for the cross-members. The folding plates can be equipped with reinforcing ribs to conduct the forces. The lower figure shows an embodiment in which the profiles have a gripping function. The bar 9 and the raised edge 13 are equipped with hook-shaped parts to hook into corresponding parts of the longitudinal member in the slot 11 or at the edge of the longitudinal member.

The invention can be summarised as follows:
A structure for a sliding roof including longitudinal members (2) and cross-members (3), and folding plates (4) between the cross-members (3) and connected to the cross-members (3). The folding plates and the longitudinal members are equipped with complementary profiles (9, 10, 13) extending in a direction parallel to the longitudinal members (2). The complementary profiles have a reinforcing effect.

It will be clear that, in the context of the invention, many variants are possible and the invention is not limited to the examples given above. Instead, the invention is limited to the subject-matter defined by the claims.

## Claims

1. Structure for a sliding roof with a tarpaulin consisting of longitudinal members (2) and cross-members (3), and folding plates (4) between the cross-members (3) and connected to the cross-members (3), **characterised in that** the folding plates and the longitudinal members are equipped with complementary profiles (9, 11, 13) extending in a direction parallel to the longitudinal members (2) to form a mechanical connection between lying-down folding plates and the longitudinal members.

2. Structure for a sliding roof according to claim 1, **characterised in that** the complementary profiles include a bar (9) on a folding plate (4) and a groove (11) in a longitudinal member (2).

3. Structure according to claim 2, **characterised in that** the folding plate (4) is equipped with more than one bar (9) and multiple grooves (11) in a longitudinal member (2).

4. Structure according to claims 2 or 3, **characterised in that** the folding plate (4) is equipped with a raised edge (13).

5. Structure according to claims 2, 3 or 4, **characterised in that** a profile of the folding plate (4) is equipped with a gripping function.

6. Structure according to one of the preceding claims, **characterised in that** the folding plates (4) consist of two outer sections (10), coupled to a cross-member (3), separated by a flexible middle section, whereby the two outer sections taper towards the middle section.

7. Structure according to claim 6, **characterized in that** the outer section of the folding plates (4) are shaped in a right angle.

8. Structure according to one of the preceding claims, **characterised in that** the folding plates (4) are made from one piece.

9. Structure according to one of the preceding claims, **characterised in that** the folding plates (4) contain a reinforcement material.

10. Structure according to one of the preceding claims, **characterised in that** a number of cross-members (3b) are shaped so that they have a complementary profile and can disengage from the longitudinal members (2) when the sliding roof is opened.

11. Sliding roof system containing a structure according to one of the preceding claims.

12. Truck containing a sliding roof system according to claim 11.

13. Curtainsider trailer containing a sliding roof system according to claim 11.

## Patentansprüche

1. Struktur für ein Schiebedach mit einer Plane, umfassend Längsglieder (2) und Querglieder (3) sowie zwischen den Quergliedern (3) Faltplatten (4), die mit den Quergliedern (3) verbunden sind,
**dadurch gekennzeichnet,**
**dass** die Faltplatten und die Längsglieder (2) mit komplementären Profilen (9, 11, 13) ausgestattet sind, die sich in eine Richtung parallel zu den Längsgliedern (2) erstrecken zum Bilden einer mechanischen Verbindung zwischen den abgelegten Faltplatten und den Längsträgern.

2. Struktur für ein Schiebedach nach Anspruch 1, **dadurch gekennzeichnet, dass** die komplementären Profile an einer Faltplatte (4) einen Stab (9) und in einem Längsglied (2) eine Nut (11) umfassen.

3. Struktur nach Anspruch 2, **dadurch gekennzeichnet, dass** die Faltplatte (4) mit mehr als einem Stab (9) ausgestattet ist und durch mehrere Nuten (11) in einem Längsglied (2).

4. Struktur nach Anspruch 2 oder 3, **dadurch gekennzeichnet, dass** die Faltplatte (4) mit einem Bördel (13) ausgestattet ist.

5. Struktur nach Anspruch 2, 3 oder 4, **dadurch gekennzeichnet, dass** ein Profil der Faltplatte (4) mit einer Spannfunktion ausgestattet ist.

6. Struktur nach einem der vorhergehenden Ansprüche, **dadurch gekennzeichnet, dass** die Faltplatten (4) aus zwei äußeren Abschnitten (10) bestehen, die mit einem Querglied (3) gekoppelt sind, welche durch einen flexiblen mittleren Abschnitt getrennt sind, wodurch sich die zwei äußeren Abschnitte in Richtung auf den mittleren Bereich verjüngen.

7. Struktur nach Anspruch 6, **dadurch gekennzeichnet, dass** der äußere Abschnitt der Faltplatten (4) in einem rechten Winkel geformt ist.

8. Struktur nach einem der vorhergehenden Ansprüche, **dadurch gekennzeichnet, dass** die Faltplatten (4) aus einem Stück hergestellt sind.

9. Struktur nach einem der vorhergehenden Ansprüche, **dadurch gekennzeichnet, dass** die Faltplatten (4) ein Verstärkungsmaterial enthalten.

10. Struktur nach einem der vorhergehenden Ansprüche, **dadurch gekennzeichnet, dass** eine Anzahl von Quergliedern (3b) so geformt ist, dass sie ein komplementäres Profil aufweisen und von den Längsgliedern (2) außer Eingriff gelangen können, wenn das Schiebedach geöffnet wird.

11. Schiebedachsystem, enthaltend eine Struktur nach einem der vorhergehenden Ansprüche.

12. Lastfahrzeug, enthaltend ein Schiebedachsystem nach Anspruch 11.

13. Curtainsider Anhänger, enthaltend ein Schiebedachsystem nach Anspruch 11.

## Revendications

1. Structure pour un toit coulissant avec une bâche comprenant des éléments longitudinaux (2) et les traverses (3), et des plaques pliables (4) entre les transverses (3) et rattachées aux transverses (3),
**caractérisée en ce**
**que** les plaques pliables et les éléments longitudinaux sont équipées de profils complémentaires (9, 11, 13) s'étendant dans une direction parallèle aux éléments longitudinaux (2) pour former une liaison mécanique entre les plaques pliables couchées et les éléments longitudinaux.

2. Structure de toit coulissant selon la revendication 1, **caractérisée en ce que** les profils complémentaires comprennent une barre (9) sur une plaque pliable (4) et une rainure (11) sur un élément longitudinal (2).

3. Structure selon la revendication 2, **caractérisée en ce que** la plaque pliable (4) est équipée de plus d'une barre (9) et plusieurs rainures (11) dans un élément longitudinal (2).

4. Structure selon les revendications 2 ou 3, **caractérisée en ce que** la plaque pliable (4) est équipée d'un rebord (13).

5. Structure selon les revendications 2, 3 ou 4, **caractérisée en ce qu'**un profil de la plaque pliable (4) est équipé d'une fonction de préhension.

6. Structure selon l'une quelconque des revendications précédentes, **caractérisée en ce que** les plaques pliables (4) sont constituées de deux sections externes (10), couplées à une transverse (3), séparées par une section médiane flexible, de sorte que les deux sections externes se rétrécissent en direction de la section médiane.

7. Structure selon la revendication 6, **caractérisée en ce que** les sections externes des plaques pliables (4) ont un profil à angle droit.

8. Structure selon l'une quelconque des revendications précédentes, **caractérisée en ce que** les plaques pliables (4) sont réalisées en une seule pièce.

9. Structure selon l'une quelconque des revendications précédentes, **caractérisée en ce que** les plaques pliables (4) contiennent un matériau de renforcement.

10. Structure selon l'une quelconque des revendications précédentes, **caractérisée en ce qu'**un nombre de traverses (3b) ont un profil complémentaire aux éléments longitudinaux (2) et peuvent s'en dégager lorsque le toit coulissant est ouvert.

11. Système de toit coulissant contenant une structure selon l'une quelconque des revendications précédentes.

12. Camion contenant un système de toit coulissant selon la revendication 11.

13. Remorque à rideaux contenant un système de toit coulissant selon la revendication 11.
